# EUROPEAN PATENT SPECIFICATION

(11) **EP 0 808 708 B1**
(45) Date of publication and mention of the grant of the patent: **04.09.2002**
(21) Application number: 97107703.7
(22) Date of filing: 12.05.1997
(51) Int. Cl.: B29D 31/505

(54) **Method for the injection overmolding of plastics**
Verfahren zum Anspritzen auf einen Kunststoff
Procédé de surmoulage par injection sur une matière plastique

(30) Priority: 20.05.1996 IT TV960064
(43) Date of publication of application: 26.11.1997
(73) Proprietor: BENETTON GROUP S.p.A., 31050 Ponzano Veneto (Treviso) (IT)
(72) Inventor: Canil, Gilberto, 30033 Noale (Province of Venezia) (IT); Bressan, Roberto, 31041 Cornuda (Province of Treviso) (IT); Zorzi, Claudio, 31050 Paderno di Ponzano Veneto (IT)
(74) Representative: Modiano, Guido, Dr.-Ing.

(56) References cited:
- EP-A- 0 645 101
- US-A- 4 024 652
- US-A- 4 150 455

## Description

The present invention relates to a method for the injection overmolding of plastics, to obtain components for sports shoes, such as for example shells for ski boots or for roller skates or ice skates or for ice shoes.

Sports shoes, such as for example ski boots, are currently manufactured by using injection molds.

The material injected in adapted presses therefore assumes the shape which is preset by the molds; the thickness is also predefined, since it is dictated by the structural requirements of the shoe.

The material used for injection must have rigidity properties which meet the technical requirements and the stresses affecting the shoe.

However, it has been observed that in sports shoes, and particularly in ski boots, for example, the shell has regions wherein particular hardness is required and regions wherein the stresses or the transmission of forces are considerably reduced. Accordingly, regions are provided in which the technical requirements do not demand the injected material to have high-level hardness properties.

The optional use of a lower-quality material is also justified by a reduction in the weight of the shoe and in its costs.

EP-A-0 645 101, by this same Applicant, discloses a ski boot with improved lateral containment having a rigid element which can be applied to a shell so as to affect the metatarsal, heel, and malleolar regions thereof at least at the inner side of the foot.

Use of the rigid element has allowed to provide, for example, a shell by using a material to be injected which can be considered soft and has merely protective functions at a low cost.

The term "soft material» is used to define, for example, a polyurethane having a hardness of 54 Shore D, available for example from the German manufacturer Bayer AG, and commercially known as DESMOPAN (registered trademark) 150 S.

As an alternative, the term "soft" can be used to indicate a thermoplastic rubber having a hardness of 52 Shore D, commercially available under the trade-name MEGOL (registered trademark) DE 52, and manufactured by the Italian company API S.p.A..

These materials are two of the possible examples of the use of "soft" materials, this term being used to designate any material which can deform during sports practice and therefore does not have such mechanical characteristics as to withstand the stresses or forces applied during sports practice.

However, the hypothesis of producing the rigid element described in the cited application by injection-overmolding a "rigid" material on a base entailed problems, since the above-described conventional processes related to the issue being presented entail seepage of the "rigid» material or problems in centering the component of the shoe in the mold, and this accordingly entails many inaccuracies in the regions for delimiting one material from the other.

The term "rigid material" is used to define material, such as polyurethane or polypropylene, which is harder than the material referenced to as "soft"; for example, polyurethane having a hardness of 67 Shore D, of the type produced commercially by Bayer AG under the trade-name DESMOPAN (registered trademark) 8410, can be considered as a "rigid" material.

As an alternative, polypropylene having a hardness of 72 Shore D, marketed by the Dutch company DSM N.V. under the trade-name STAMILAN (registered trademark) PHC 22, can be considered as a "rigid" material.

In this case, too, those skilled in the art will know immediately which injectable material to choose, among the possible solutions in addition to those which have been described, in order to achieve a desired mechanical rigidity or a desired softness for the various parts of the component of the sports shoe.

The above-cited problems have also been observed in the production of the product disclosed in the above-cited EP-A-0 645 101, which also discloses a ski boot comprising a shell and a quarter, one whereof is constituted by a rigid lattice-like frame and by a soft covering element which is injection-overmolded or associated with the frame.

Use of conventional injection-overmolding processes has in fact entailed seepages of material and difficulties in centering the components in the mold.

Therefore, if the prior art is used to achieve the injection-overmolding of two materials having different characteristics, even if there are clearly delimited regions in which injection-overmolding occurs, problems occur related to seepage of the injection-overmolded material onto the underlying one, caused by inaccurate closure of the mold, as well as optimization problems if the injection-overmolding occurs "flush" with the underlying material.

One possibility of obviating these problems might be to design and manufacture the molds very accurately, but this would entail very high consequent production costs and in any case production would be affected by a large number of rejects.

An aim of the present invention is to solve the described problems, by eliminating the drawbacks of the cited prior art.

This aim is achieved by the method according to claim 1.

A further advantage of the the present invention is to provide an injection-overmolding process which allows to achieve greater flexibility and tolerance during design.

A further advantage of the present invention is to provide a method for injection-overmolding a second harder material over a first soft material which allows to obtain a product offering good precision in the regions that delimit the two materials.

Still a further advantage of the present invention is to provide a method which has low costs for producing the molds, thus achieving a production which is affected by a low number of rejects.

The particular characteristics and advantages of the present invention will become apparent from the following detailed description of a particular but not exclusive embodiment of the method as illustrated in the accompanying drawings, wherein:

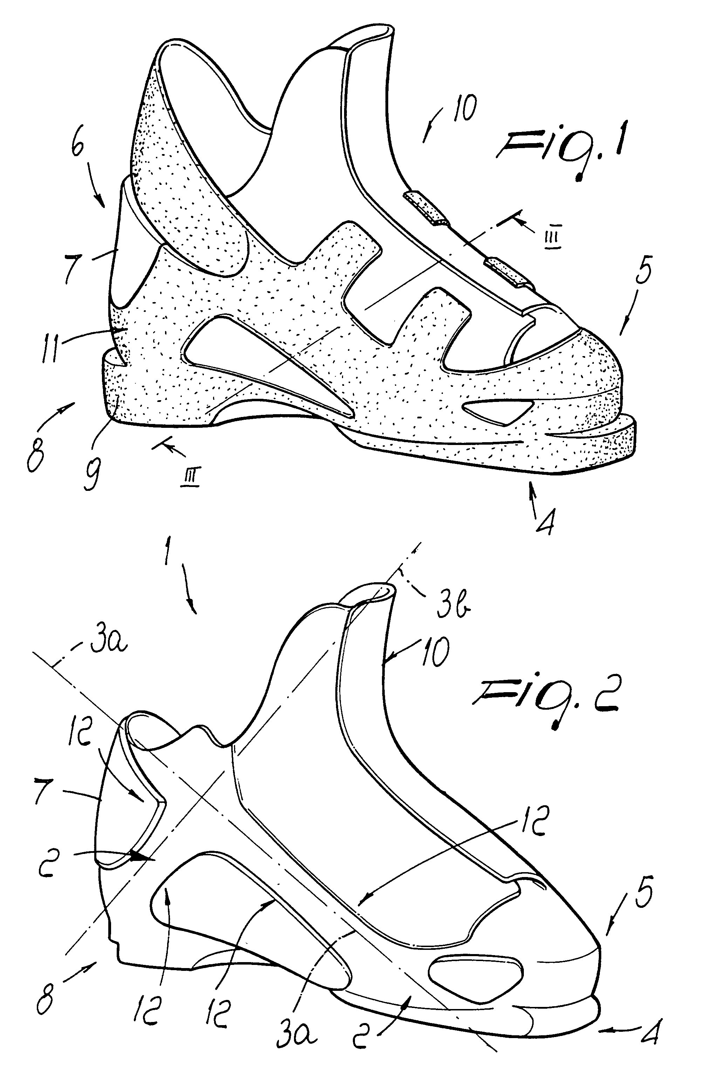

figure 1 is a lateral perspective view of a component of a sports shoe which is constituted by a shell of a ski boot;
figure 2 is a view, similar to the preceding one, of the component, in which the first injection of a first soft material has been performed;

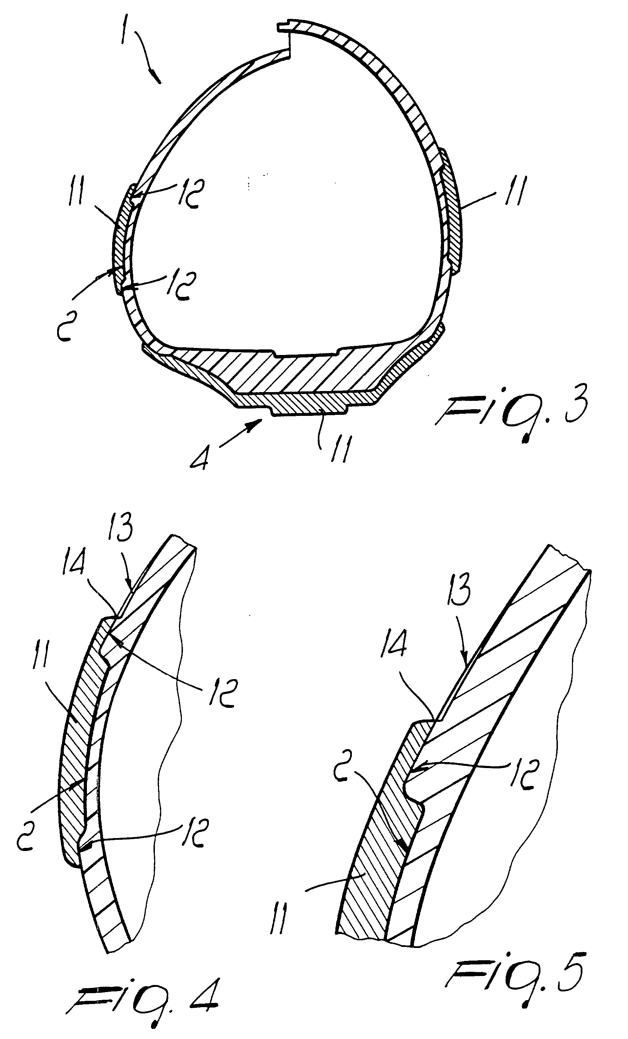

figure 3 is a sectional view, taken along the plane III-III of figure 1;
figure 4 is a view of a detail of figure 3;
figure 5 is a view of a detail of figure 4.

With reference to the above figures, the reference numeral 1 designates a shell of a sports shoe, such as for example a ski boot, to illustrate an application of the method according to the present invention.
By means of a mold which may be produced with conventional systems, the method according to the invention comprises a first injection of a first "soft" material (according for example to the above-described specifications) in order to obtain the shell and form one or more channels or grooves 2, that may be interconnected, obtained along clearly defined primary lines.

The primary lines, designated by the reference numerals 3a and 3b, follow the directions along which the forces acting on the boot and caused by the forces applied by the leg to the ski produce the highest stress; said lines are inclined with respect to the resting plane of the sole 4 and connect the toe region 5 to the region 6 lying above the heel 7 of the foot, as well as the region 8 adjacent to the heel 9 of the sole 4 to the foot instep region 10.

The method performs an injection-overmolding of a second "rigid" material (according to the above-stated specifications) which is such as to form a strong load-bearing frame 11 for the sports shoe; said injection-overmolding and the corresponding flow of the second material occur inside the mold along the channels 2, so as to affect not only the channels but also regions 12 adjacent thereto.

The injection-overmolding of the "rigid" material entails the production of a greater thickness for the shell 1 at the channels 2 and therefore along the primary lines 3a, 3b whereat the greatest stresses occur during sports practice.

The thickness of the "rigid" material injection-overmolded on the first "soft" material determines the pressure acting in the mold closure regions; if said pressure is high, it does not cause seepages, because the second "rigid" material also affects the neighboring regions 12 of the channels 2, which are characterized by a reduction in the thickness of the second "rigid" material during its injection which therefore entails a limited pressure and therefore a dramatic reduction in seepage possibilities.

In order to further reduce this possibility, and thus increase the finish degree of the component of the sports shoe, it is possible to achieve optimum mold closure by adjusting the closing pressure of the second mold so that the injection-overmolding performed on the semifinished part obtained by the first injection of the first "soft" material achieves a compression of said soft material in a region 13 which is adjacent to the edge 14 of the impression formed to obtain the frame 11.

Regions having different rigidities according to the stresses that act in each individual region, for example of the boot, are thus formed.

The described method allows to obtain an excellent finish of the injection-overmolded edge, avoiding seepage of the "rigid" material owing to the lower pressure applied by the reduced perimetric thickness thereof at the regions 12 which are adjacent to the channels 2.

The method also allows to tolerate unexpected shrinkages of the "rigid" material without causing in any case a "groove" effect in the region where injection-overmolding on the first "soft" material is performed.

A component for sports shoes is also obtained which has a desired outward aesthetic appearance; at the same time, a reduction in the design and production costs of the mold and in the production costs of the product is achieved, since extremely accurate design and construction of the molds is not required. It is thus possible to use a "soft" material, which is less expensive than the "rigid" material, at the same time achieving optimum comfort for the user and in any case an optimum transmission of forces to the sports implement.

The method also allows to reduce the number of rejects caused by shrinkage of the injection-overmolded material, by virtue of the tolerance provided at the regions 12 adjacent to the channels 2, which in turn allow to differentiate the component of the sports shoe from the point of view of rigidity.

Once again it is noted that the method also eliminates the possibility of perimetric seepages along the edge of the second mold for the injection-overmolding of the "rigid" material, allowing to achieve an excellent finish of the overmolded edge by means of the calibrated compression performed by the second mold during injection-overmolding.

Finally, it is noted that the provision of the channels and the injection-overmolding of the "rigid" material at the regions 12 which are adjacent thereto allow to vary the aesthetic appearance of the frame of the sports shoe without having to redefine said channels and therefore without having to remake the molds, as instead occurs in the prior art.

The method according to the invention is of course susceptible of numerous modifications and variations, within the scope of the claims.

Likewise, the materials and the dimensions which constitute the individual channels, and/or the extent and extension of the regions 12 adjacent to the channels, and the thicknesses of the first and second materials, may also be the most pertinent according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for the injection-overmolding of plastics, for obtaining a component for sports shoes, comprising a first injection of a first soft material and an injection-overmolding of a second harder material, **characterized in that** said first injection produces channels (2) in the component (1) of the sports shoe arranged above the sole (4) and **in that** said injection overmolding of said second harder material affects said channels (2) and also affects regions (12) adjacent to said channels (2), said regions (12) delimiting the injection overmolded edge and the thickness of said second harder material in said regions (12) being reduced.

2. A method according to claim 1, **characterized in that** a first injection of a first soft material is performed by means of a first mold, obtained by conventional methods, in order to form said component for sports shoes and form channels.

3. A method according to claim 2, **characterized in that** said channels are obtained along primary lines (3a,3b) which follow the directions along which the forces applied to said component during sports practice produce the highest stresses.

4. A method according to claim 2 for obtaining a shell for a ski boot or a skate, **characterized in that** said channels are formed along primary lines (3a,3b) which are inclined with respect to the resting plane of the sole (4) and connect the toe region (5) to the region lying above the heel (7) of the foot and connect the region lying adjacent to the heel of the sole (4) to the foot instep region.

5. A method according to claim 2, **characterized in that** an injection-overmolding of a second rigid material is performed inside a second mold along said channels (2) so as to affect not only said channels (2) but also regions adjacent thereto.

6. A method according to claim 5, **characterized in that** said injection-overmolding produces a strong load-bearing frame for said component of said sports shoe.

7. A method according to claim 5, **characterized in that** said injection-overmolding of said rigid material produces, at said channels (2) and at said regions adjacent thereto, a higher thickness for said component with respect to said first injection of soft material.

8. A method according to claim 5, **characterized in that** the closing pressure of said second mold is adjusted so that it forms an impression on said component of said sports shoe arranged above the sole obtained from said first injection of said first soft material in a region (13) adjacent to the edge (14) of the injection-overmolding which constitutes a frame.

## Patentansprüche

1. Verfahren zum Überspritzgießen von Plastik zum Erhalt eines Bestandteils eines Sportschuhs, umfassend:
eine erste Einspritzung eines ersten weichen Materials und ein Überspritzgießen eines zweiten härteren Materials, **dadurch gekennzeichnet, daß** die erste Einspritzung Kanäle (2) im Bestandteil (1) des Sportschuhs erzeugt, die über der Sohle (4) angeordnet sind, **und dadurch, daß** sich das Überspritzgießen des zweiten härteren Materials auf die Kanäle (2) auswirkt, **und daß** es sich auch auf Bereiche (12) benachbart zu den Kanälen (2) auswirkt, wobei die Bereiche (12) den überspritzgegossenen Rand begrenzen und die Dicke des zweiten härteren Materials in den Bereichen (12) verringert wird.

2. Verfahren nach Anspruch 1, **dadurch gekennzeichnet, daß** eine erste Einspritzung eines ersten weichen Materials mittels einer ersten Gußform durchgeführt wird, die durch herkömmliche Verfahren erhalten wird, um den Bestandteil für Sportschuhe auszubilden und Kanäle zu bilden.

3. Verfahren nach Anspruch 2, **dadurch gekennzeichnet, daß** die Kanäle entlang elementarer Linien (3a, 3b) erhalten werden, die den Richtungen folgen, entlang denen, die Kräfte, die auf den Bestandteil während der Sportausübung angewandt werden, die höchsten Beanspruchungen erzeugen.

4. Verfahren nach Anspruch 2 zum Erhalt einer Schale für einen Skischuh oder einen Rollschuh /Schlittschuh, **dadurch gekennzeichnet, daß** die Kanäle entlang elementarer Linien (3a, 3b) ausgebildet werden, die bezüglich der Ruheebene der Sohle (4) geneigt sind und den Zehenbereich (5) mit dem Bereich über dem Fersenbereich (7) des Fußes verbinden und den Bereich, der benachbart der Ferse der Sohle (4) liegt, mit dem Fußeinstiegsbereich verbinden.

5. Zlerfahren nach Anspruch 2, **dadurch gekennzeichnet, daß** ein Überspritzgießen mit einem zweiten starren Material innerhalb einer zweiten Gußform entlang den Kanälen (2) durchgeführt wird, um sich nicht nur auf die Kanäle (2), sondern auch auf Bereiche benachbart dazu auszuwirken.

6. Verfahren nach Anspruch 5, **dadurch gekennzeichnet, daß** das Überspritzgießen einen starken, kräftetragenden Rahmen für den Bestandteil des Sportschuhs bildet.

7. Verfahren nach Anspruch 5, **dadurch gekennzeichnet, daß** das Überspritzgießen des starren Materials an den Kanälen (2) und in den Bereichen benachbart dazu eine höhere Dicke für den Bestandteil in Bezug auf die erste Einspritzung des weichen Materials bildet.

8. Verfahren nach Anspruch 5, **dadurch gekennzeichnet, daß** der Einschlußdruck der zweiten Gußform reguliert wird, so daß sie eine Vertiefung auf dem Bestandteil des Sportschuhs ausbildet, die über der Sohle, die durch die erste Einspritzung des ersten weichen Materials erhalten worden ist, in einem Bereich (13) benachbart zu dem Rand (14) des Überspritzgießens, das einen Rahmen bildet.

## Revendications

1. Procédé de surmoulage par injection de matière plastique, pour obtenir un composant pour chaussures de sport, comprenant une première injection d'une première matière souple et un surmoulage par injection d'une seconde matière plus dure, **caractérisé en ce que** ladite première injection produit des canaux (2) dans le composant (1) de la chaussure de sports disposés au-dessus de la semelle (4), et **en ce que** ledit surmoulage par injection de ladite seconde matière plus dure affecte lesdits canaux (2) et affecte également des régions (12) voisines desdits canaux (2), lesdites régions (12) délimitant le bord surmoulé par injection, et l'épaisseur de ladite seconde matière plus dure dans lesdites régions (12) étant réduite.

2. Procédé selon la revendication 1, **caractérisé en ce qu'**une première injection d'une première matière souple est effectuée au moyen d'un premier moule, obtenu par des procédés conventionnels, afin de former ledit composant pour chaussures de sport et former les canaux.

3. Procédé selon la revendication 2, **caractérisé en ce que** lesdits canaux sont obtenus le long de lignes principales (3a, 3b) qui suivent les directions le long desquelles les forces appliquées audit composant pendant la pratique des sports produisent les contraintes les plus élevées.

4. Procédé selon la revendication 2 pour obtenir une coque pour une chaussure de ski ou un patin, **caractérisé en ce que** lesdits canaux sont formés le long de lignes principales (3a, 3b) qui sont inclinées par rapport au plan d'appui de la semelle (4) et relient la région d'orteils (5) à la région se trouvant au-dessus du talon (7) du pied et relient la région se trouvant au voisinage du talon de la semelle à la région du coup-de-pied.

5. Procédé selon la revendication 2, **caractérisé en ce qu'**un surmoulage par injection d'une seconde matière rigide est effectué à l'intérieur d'un second moule le long desdits canaux (2) de manière à affecter non seulement lesdits canaux (2), mais également des régions voisines de ceux-ci.

6. Procédé selon la revendication 5, **caractérisé en ce que** le surmoulage par injection produit un cadre résistant de support de charge pour ledit composant de ladite chaussure de sports.

7. Procédé selon la revendication 5, **caractérisé en ce que** ledit surmoulage par injection de ladite matière rigide produit, dans lesdits canaux (2) et dans lesdites régions voisines de ceux-ci, une épaisseur plus grande pour ledit composant par rapport à ladite première injection de matière souple.

8. Procédé selon la revendication 5, **caractérisé en ce que** la pression de fermeture dudit second moule est réglée de manière à former une empreinte sur ledit composant de ladite chaussure de sport disposée au-dessus de la semelle obtenue par ladite première injection de ladite première matière souple dans une région (13) voisine du bord (14) du surmoulage par injection qui constitue un cadre.
